# EUROPÄISCHE PATENTSCHRIFT

(11) **EP 1 729 030 B1**
(45) Veröffentlichungstag und Bekanntmachung des Hinweises auf die Patenterteilung: **27.02.2008**
(21) Anmeldenummer: 06010868.5
(22) Anmeldetag: 26.05.2006
(51) Int. Cl.: F16F 9/02, B60G 13/14

(54) **Verstellbarer Schwingungsdämpfer mit gasförmigem Dämpfmedium**
Adjustable damper with gaseous damping medium
Amortisseur à gaz réglable

(30) Priorität: 03.06.2005 DE 102005025978
(43) Veröffentlichungstag der Anmeldung: 06.12.2006
(73) Patentinhaber: ZF FRIEDRICHSHAFEN AG, 88046 Friedrichshafen (DE)
(72) Erfinder: Sonnenburg, Reinhard, Dr., 97702 Münnerstadt (DE); Förster, Andreas, 97422 Schweinfurt (DE)

(56) Entgegenhaltungen:
- DE-A1- 4 334 007
- DE-A1- 4 418 120
- DE-A1- 19 932 717
- FR-A- 688 415
- US-A1- 2005 046 097

## Beschreibung

Die Erfindung betrifft einen verstellbaren Schwingungsdämpfer mit gasförmigem Dämpfmedium gemäß dem Oberbegriff von Patentanspruch 1.

Die DE 44 18 120 A1 beschreibt eine pneumatische Feder-Dämpfer-Einheit, bei der als Dämpfmedium ein Gas, z. B. gewöhnliche Luft verwendet wird. Pneumatische Dämpfer haben sich im Fahrzeugbau bisher nur bei den Anwendungen durchgesetzt, bei denen von einer definierten Anregung auszugehen ist, z. B. Handschuhfachklappen, deren Öffnungsbewegung bedämpft wird. Dabei spielt auch eine Rolle, dass im Fahrzeuginnenraum keine ölgefüllten Aggregate zur Anwendung kommen sollen, da eine Leckage zu einer Verschmutzungsbelastung führen kann.

Ein Schwingungsdämpfer mit einem pneumatischen Dämpfmedium bietet generell den Vorteil, dass durch den Wegfall der Ölfüllung eine geringere Masse vorliegt und bei einer Fahrzeugverschrottung keine Trockenlegung der Schwingungsdämpfer vorgenommen werden muss. Trotzdem haben sich pneumatische Dämpfmedien im Schwingungsdämpferbau noch nicht durchsetzen können, da die Kompressibilität des Dämpfmediums bei einem konventionellen Schwingungsdämpfer ein unbefriedigendes Abklingverhalten nach einer Schwingbewegung mit sich bringt. Ein Schwingungsdämpfer mit einem pneumatischen Dämpfmedium stellt letztlich ein Aggregat mit zwei parallel wirkenden Federn dar, deren Federwirkung jedoch abhängig ist von der Federungsgeschwindigkeit.

Mit einem verstellbaren Schwingungsdämpfer kann dieses prinzipielle Betriebsverhalten zumindest in Grenzen überwunden werden. In der besagten DE 44 18 120 A1 weist ein Ventilkörper zwischen zwei mit einem gasförmigen Dämpfmedium gefüllten Räumen Durchlasskanäle auf, die von elastischen Ventilscheiben verschlossen werden. In Abhängigkeit einer definierten Druckdifferenz zwischen den beiden Räumen wirkt eine Druckkraft in Öffnungsrichtung auf die elastische Ventilscheibe. Bei einem Schwingungsdämpfer mit einem hydraulischen Dämpfmedium muss nur eine sehr kleine Druckdifferenz vorliegen, um eine Öffnungsbewegung der Ventilscheibe zu bewirken, da das Dämpfmedium inkompressibel ist. Ein gasförmiges Dämpfmedium verfügt über ein völlig anderes Betriebsverhalten. Bis zu der notwendigen Druckdifferenz erzeugt der Schwingungsdämpfer keine Dämpfkraft, sondern nur eine Federkraft, durch die in den besagten Räumen eingeschlossenen Gasmassen. Dadurch ergibt sich ein schlechtes Abklingverhalten, insbesondere bei kleinen hochfrequenten Amplituden. Trotz der Verstellbarkeit der Vorspannung der Ventilscheibe ist das Betriebsverhalten des Schwingungsdämpfers in der Anwendung in einem Fahrwerk nicht überzeugend.

Die DE 199 32 717 A1 betrifft einen verstellbaren Schwingungsdämpfer mit gasförmigem Dämpfmedium, bei dem Dichtscheiben in einem Ventilkörper einseitig Durchgangsöffnungen verschließen. Für jede Strömungsrichtung bzw. Dichtscheibe ist ein Ringmagnet vorgesehen, mit dem man die Vorspannung der Dichtscheibe auf dem Ventilkörper einstellen kann.

Aufgabe der vorliegenden Erfindung ist es, einen verstellbaren Schwingungsdämpfer mit einem pneumatischen Dämpfmedium zu realisieren, der ein für die Anwendung in einem Fahrwerk akzeptables Betriebsverhalten aufweist.

Erfindungsgemäß wird die Aufgabe dadurch gelöst, dass in dem Ventilkörper ein Ventilelement, das den mindestens einen Durchlasskanal zumindest teilverschließt, unabhängig von einer Verdrängerbewegung oder einem Differenzdruck zwischen den Räumen des Schwingungsdämpfers von dem Aktuator in eine den Durchlasskanal freigebende Durchlassstellung bewegbar ist.

Der große Vorteil besteht darin, dass für die Dämpfung der Verdrängerbewegung praktisch keine Druckdifferenz am Ventilkörper vorliegen muss, da man den Durchlasskanal unabhängig von der Verdrängerbewegung öffnen kann. Der bisherige nachteilige Effekt, dass ein pneumatischer Schwingungsdämpfer bei kleinen Druckunterschieden am Ventilkörper als ein Aggregat mit zwei parallel geschalteten Federn wirksam ist, kann durch die Erfindung überwunden werden.

Gemäß einem vorteilhaften Unteranspruch ist zwischen den dämpfmediumgefüllten Räumen ein Druckbegrenzungsventil angeordnet. Für den Notfall kann das Dämpfmedium über das parallelgeschaltete Druckbegrenzungsventil strömen und dabei eine Dämpfkraft erzeugen.

Des weiteren ist vorgesehen, dass das Druckbegrenzungsventil innerhalb des verstellbaren Ventilelements angeordnet ist. Es ergibt sich eine besonders kompakte Bauform.

Vorteilhafterweise ist das Druckbegrenzungsventil für beide Durchströmungsrichtungen des Ventilkörpers ausgeführt. Man kann z. B. ein beidseitig mit Ventilscheiben bestücktes Ventil vorsehen.

Zur Minimierung der Stellkräfte des Aktuators wird das Ventilelement beidseitig mit dem in dem dämpfmediumgefüllten Raum herrschenden Druck beaufschlagt.

Dazu weist der Ventilkörper einen topfförmigen Aufnahmebereich für das Ventilelement auf, wobei eine Durchgangsöffnung eine Ober- und eine Unterseite des Ventilelements verbindet, so dass an beiden Seiten annähernd derselbe Betriebsdruck vorliegen kann.

Das Ventilelement verfügt über eine sacklochförmige Aufnahme, in der das Druckbegrenzungsventil angeordnet ist.

Das Druckbegrenzungsventil ist in einem axialen Abstand zu einem Boden der Aufnahme angeordnet und ein dadurch begrenzter Ventilraum ist mit einem dämpfmittelgefüllten Raum des Schwingungsdämpfers verbunden. Damit ist das Ventilelement für beide Durchströmungsrichtungen druckausgeglichen.

Das Druckbegrenzungsventil weist einen Überbrückungskanal von einem der dämpfmediumgefüllten Arbeitsräume zu der Rückseite des Ventilelements auf. Der Überbrückungskanal als Rohrkörper verläuft durch den Ventilraum und fördert damit die kompakte Bauweise des gesamten Ventilaufbaus.

Das Ventilelement wird in eine Betriebsstellung vorgespannt, um einen definierten Durchtrittsquerschnitt zu erreichen, der je nach Anforderung auch die Größe 0 einnehmen kann.

Mindestens eine Vorspannfeder stützt sich am Druckbegrenzungsventil ab, das ortsfest mit dem Ventilelement verbunden ist.

Das Ventilelement ist als ein Sitzventil ausgeführt und stellt eine Blende dar. Umfangreiche Versuche haben ergeben, dass der Schwingungsdämpfer insbesondere dann ein vorteilhaftes Betriebsverhalten bietet, wenn ein Durchlassquerschnitt des verstellbaren Dämpfventils bei maximal geöffneter Durchlassstellung zwischen 1/100 und 1/1000 der Verdrängerfläche einnimmt.

Anhand der folgenden Figurenbeschreibung soll die Erfindung näher erläutert werden.

Es zeigt:
- Fig. 1: Ersatzschaubild eines erfindungsgemäßen Schwingungsdämpfers
- Fig. 2: Konstruktionszeichnung des erfindungsgemäßen Schwingungsdämpfers

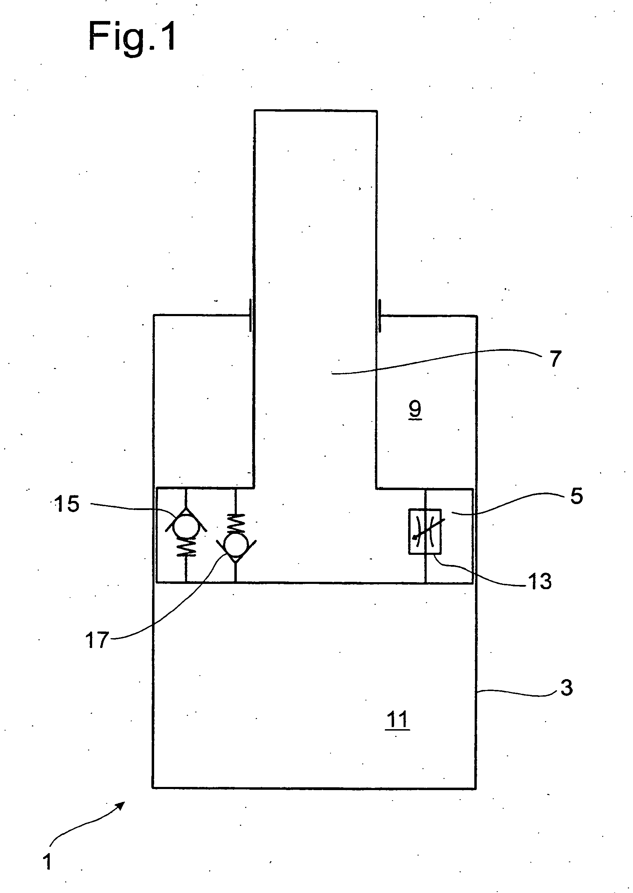

Die Fig. 1 zeigt ein Ersatzschaubild eines verstellbaren Schwingungsdämpfers 1 mit einem gasförmigen Arbeitsmedium. In einem Zylinder 3 ist ein Verdränger 5, an einer Kolbenstange 7 axial beweglich geführt und trennt zwei Arbeitsräume 9; 11. Der Zylinder kann, wie dargestellt, von einem starren Rohrkörper aber auch von einem elastischen Balgelement gebildet werden und ist begrifflich im mathematischen Sinn zu verstehen. Der Verdränger umfasst ein verstellbares Ventilelement 13 und zwei Druckbegrenzungsventile 15; 17, die dem verstellbaren Ventilelement funktional parallel geschaltet sind. Für den Normalbetrieb dient ausschließlich das verstellbare Ventilelement, das unabhängig von einer Verdrängerbewegung in eine Durchlassstellung bewegbar ist.

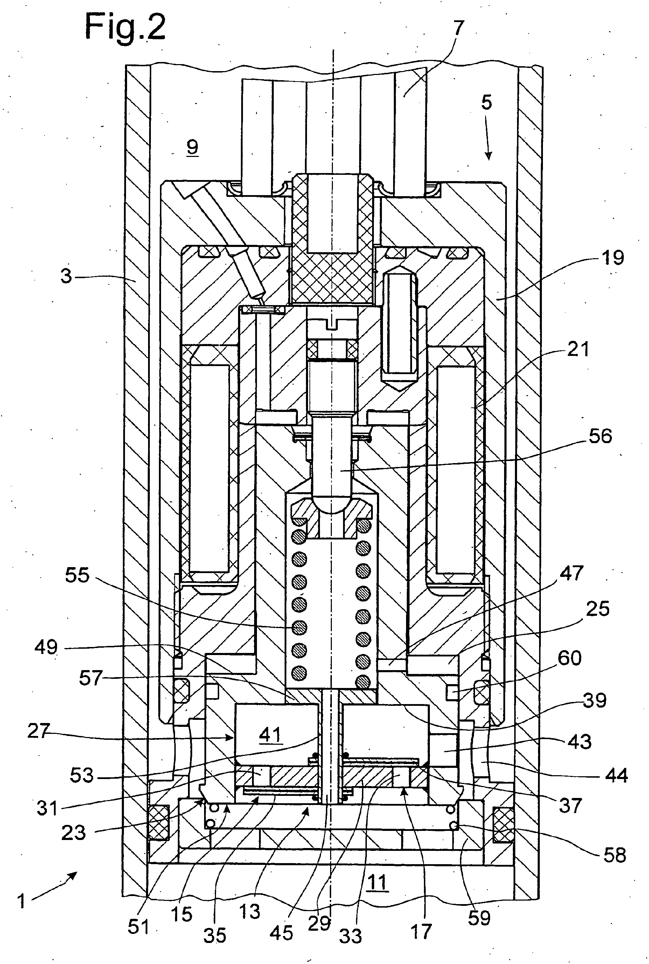

Die Fig. 2 beschränkt sich auf den Bereich des Verdrängers 5. In einem Ventilkörper 19 ist eine Magnetspule 21 angeordnet, die auf das Ventilelement 13 eine axiale Abhubkraft von einem Ventilsitz. 23 ausübt. Das Ventilelement selbst ist als ein gestufter Rohrkörper ausgeführt und gleitet in einem topfförmigen Aufnahmebereich 25 des Ventilkörpers. In einer sacklochförmigen Aufnahme 27 des Ventilelements 13 sind die Druckbegrenzungsventile 15; 17 angeordnet. Eine in dem Ventilelement 13 fixierte Scheibe 29 verfügt über Drosselöffnungen 31; 33, die von elastischen Ventilscheiben 35; 37 abgedeckt werden. Die Scheibe 29 ist in einem axialen Abstand zu einem Boden 39 der Aufnahme 27 angeordnet und begrenzt mit dem Boden 39 einen Ventilraum 41, der mit dem dämpfmittelgefüllten Arbeitsraum 9 über mindestens eine Queröffnung 43 im Ventilelement 13 und eine Anschlussöffnung 44 im Ventilkörper 19 verbunden ist.

Das Ventilelement 13 verfügt über eine Durchgangsöffnung 45, die zusammen mit einem radial verlaufenden Kanal 47 eine Oberseite 49 und eine Unterseite 51 des Ventilelements 13 miteinander verbindet, so dass an beiden Seiten 49; 51 annähernd derselbe Betriebsdruck vorliegen kann. Die Durchgangsöffnung 45 wird von einem rohrförmigen Überbrückungskanal 53 in der Scheibe 29 für die Druckbegrenzungsventile gebildet und verbindet den dämpfmediumgefüllten Arbeitsraum mit der Oberseite bzw. Rückseite 49 des Ventilelements 13.

Das Ventilelement 13 wird von mindestens einer Vorspannfeder 55; 58 in einer gewünschten Ausgangsstellung gehalten, z. B. mit einem definierten Durchtrittsquerschnitt oder auch in einer Schließstellung auf dem Ventilsitz 23. Die Vorspannfeder 55 stützt sich dabei auf einem Flansch 57 als Bestandteil der Scheibe 29 der Druckbegrenzungsventile ab und kann in dieser Ausführungsvariante durch einen Schraubbolzen 56 individuell eingestellt werden. In diesem Ausführungsbeispiel kommen zwei gegensinnig wirksame Vorspannfedern 55, 58 zur Anwendung, die als Kraftwaage das Ventilelement 13 in einer Durchlassstellung halten.

Bei einer Verdrängerbewegung in Richtung des kolbenstangenseitigen Arbeitsraums 9 wird das darin enthaltene gasförmige Dämpfmedium komprimiert, strömt über die Anschlussöffnung 44 in den Verdränger 5 und steht an der Ventilsitzfläche 23 an. Die Queröffnung 43 setzt den Ventilraum 41 unter Druck, der auf den Boden 39 und auf die Scheibe 29 des Druckbegrenzungsventils wirkt, so dass das Ventilelement druckausgeglichen ist. Je nach gewünschter Dämpfkraft kann das als Sitzventil ausgeführte Ventilelement 13 von dem Aktuator, in diesem Fall der Magnetspule 21 von der Sitzfläche 23 abgehoben werden. Der dabei entstehende ringförmige Durchlassquerschnitt soll bei maximal geöffneter Durchlassstellung zwischen 1/100 und 1/1000 der Verdrängerfläche einnehmen, die der Größe der Stirnfläche des Verdrängers in Richtung des Arbeitsraums 11 entspricht. Insbesondere bei kleinen und/oder langsamen Verdrängerbewegungen wird man gegen die Kraft der Vorspannfeder 55 tendenziell eine größere Durchlassstellung des Ventilelements 13 vorsehen. Sollte die vorgesehene Durchlassstellung für einen Druckabbau zwischen den beiden Räumen 9; 11nicht ausreichen, dann kann über den Ventilraum 41 Dämpfmedium durch die Drosselöffnungen 31 auf die mindestens eine Ventilscheibe 35 wirken und diese von der Scheibe 29 abheben lassen, so dass über diesen Strömungsweg eine zusätzliche Möglichkeit für den Druckabbau besteht. Eine Dichtung 60 verhindert ein Hinterströmen des Ventilelements 13 in Richtung des topfförmigen Aufnahmebereichs 25.

Fährt der Verdränger 5 in den Zylinder 3 ein, dann durchströmt das Dämpfmedium eine Ventilsitzscheibe 59 als Teil des Ventilkörpers 19 und trifft auf das Ventilelement 13 sowie auf das Druckbegrenzungsventil 17. Parallel gelangt Dämpfmedium durch die Durchgangsöffnung 45 und dem radial verlaufenden Kanal 47 in den topfförmigen Aufnahmebereich 25 und damit auf die Oberseite 49 des Ventilelements 13, das folglich auch für diese Strömungsrichtung druckausgeglichen ist. Über das willkürlich eingestellte Ventilelement kann das gasförmige Dämpfmedium über die Anschlussöffnung 44 im Ventilkörper in den kolbenstangenseitigen Arbeitsraum 9 abströmen. Wird ein vorgegebener Spitzendruck im Raum 11 überschritten, dann kann das Dämpfmedium auch über das Druckbegrenzungsventil 17, den Ventilraum 41 und die Queröffnung 43 im Zusammenwirken mit der Anschlussöffnung 44 in den kolbenstangenseitigen Raum 9 entweichen.

## Patentansprüche

1. Verstellbarer Schwingungsdämpfer (1), umfassend einen Zylinder (3), in dem ein Verdränger (5) eine Betriebsbewegung ausführt, bei der ein gasförmiges Dämpfmedium in einem Arbeitsraum (9; 11) komprimiert wird, wobei der Arbeitsraum (9; 11) mit einem Ventilkörper (19) in Wirkverbindung steht, der mindestens einen Durchlasskanal (23; 44) von dem besagten Arbeitsraum (9; 11) zu einem weiteren Raum (9; 11) aufweist und der Strömungswiderstand des mindestens einen Durchlasskanals (23; 44) mittels eines Aktuators (21) einstellbar ist,
**dadurch gekennzeichnet,**
**dass** in dem Ventilkörper (19) ein Ventilelement (13), das den mindestens einen Durchlasskanal (23; 44) zumindest teilverschließt, unabhängig von einer Verdrängerbewegung oder einem Differenzdruck zwischen den Räumen (9; 11) des Schwingungsdämpfers (1) von dem Aktuator (21) in eine den Durchlasskanal (23; 44) freigebende Durchlassstellung bewegbar ist.

2. Verstellbarer Schwingungsdämpfer nach Anspruch 1,
**dadurch gekennzeichnet,**
**dass** zwischen den dämpfmediumgefüllten Räumen (9; 11) funktional parallel zu dem Ventilelement (13) ein Druckbegrenzungsventil (15; 17) angeordnet ist.

3. Verstellbarer Schwingungsdämpfer nach Anspruch 2,
**dadurch gekennzeichnet,**
**dass** das Druckbegrenzungsventil (15; 17) innerhalb des verstellbaren Ventilelements (13) angeordnet ist.

4. Verstellbarer Schwingungsdämpfer nach Anspruch 2,
**dadurch gekennzeichnet,**
**dass** das Druckbegrenzungsventil (15; 17; 29) für beide Durchströmungsrichtungen des Ventilkörpers (19) ausgeführt ist.

5. Verstellbarer Schwingungsdämpfer nach Anspruch 1,
**dadurch gekennzeichnet,**
**dass** das Ventilelement (13) beidseitig mit dem in dem dämpfmediumgefüllten Raum (11) herrschenden Druck beaufschlagt wird.

6. Verstellbarer Schwingungsdämpfer nach Anspruch 5,
**dadurch gekennzeichnet,**
**dass** der Ventilkörper (19) einen topfförmigen Aufnahmebereich (25) für das Ventilelement aufweist, wobei eine Durchgangsöffnung (45) eine Ober- und eine Unterseite (49; 51) des Ventilelements (13) verbindet, so dass an beiden Seiten (49; 51) annähernd derselbe Betriebsdruck vorliegen kann.

7. Verstellbarer Schwingungsdämpfer nach Anspruch 6,
**dadurch gekennzeichnet,**
**dass** das Druckbegrenzungsventil (15; 17; 29) einen Überbrückungskanal (53) von einem der dämpfmediumgefüllten Arbeitsräume (11) zu der Rückseite (49) des Ventilelements (13) aufweist.

8. Verstellbarer Schwingungsdämpfer nach Anspruch 3,
**dadurch gekennzeichnet,**
**dass** das Ventilelement (13) eine sacklochförmige Aufnahme (27) aufweist, in der das Druckbegrenzungsventil (15; 17; 29) angeordnet ist.

9. Verstellbarer Schwingungsdämpfer nach Anspruch 6,
**dadurch gekennzeichnet,**
**dass** das Druckbegrenzungsventil (15; 17; 29) in einem axialen Abstand zu einem Boden (39) der Aufnahme (27) angeordnet ist und ein dadurch begrenzter Ventilraum (41) mit einem dämpfmittelgefüllten Raum (9) des Schwingungsdämpfers (1) verbunden ist.

10. Verstellbarer Schwingungsdämpfer nach Anspruch 1,
**dadurch gekennzeichnet,**
**dass** das Ventilelement (13) in eine Betriebsstellung vorgespannt wird.

11. Verstellbarer Schwingungsdämpfer nach Anspruch 10,
**dadurch gekennzeichnet,**
**dass** sich mindestens eine Vorspannfeder (55) am Druckbegrenzungsventil (29; 55) abstützt.

12. Verstellbarer Schwingungsdämpfer nach Anspruch 1,
**dadurch gekennzeichnet,**
**dass** das Ventilelement (13) als ein Sitzventil ausgeführt ist.

13. Verstellbarer Schwingungsdämpfer nach Anspruch 1,
**dadurch gekennzeichnet,**
**dass** ein Durchlassquerschnitt bei maximal geöffneter Durchlassstellung zwischen 1/100 und 1/1000 der Verdrängerfläche einnimmt.

## Claims

1. Adjustable vibration damper (1), comprising a cylinder (3), in which a displacer (5) performs an operating movement, in which a gaseous damping medium is compressed in an operating space (9; 11), the operating space (9; 11) being operatively connected to a valve body (19) which has at least one passage channel (23; 44) from the said operating space (9; 11) to a further space (9; 11) and the flow resistance of the at least one passage channel (23; 44) can be set by means of an actuator (21), **characterized in that** a valve element (13) which at least partially closes the at least one passage channel (23; 44) in the valve body (19) can be moved by the actuator (21) into a passage position which opens the passage channel (23; 44), independently of a displacer movement or a differential pressure between the spaces (9; 11) of the vibration damper (1).

2. Adjustable vibration damper according to Claim 1, **characterized in that** a pressure-relief valve (15; 17) is arranged in a functionally parallel manner to the valve element (13) between the spaces (9; 11) which are filled with damping medium.

3. Adjustable vibration damper according to Claim 2, **characterized in that** the pressure-relief valve (15; 17) is arranged within the adjustable valve element (13).

4. Adjustable vibration damper according to Claim 2, **characterized in that** the pressure-relief valve (15; 17; 29) is configured for both throughflow directions of the valve body (19).

5. Adjustable vibration damper according to Claim 1, **characterized in that** the valve element (13) is loaded on both sides with the pressure which prevails in the space (11) which is filled with damping medium.

6. Adjustable vibration damper according to Claim 5, **characterized in that** the valve body (19) has a cup-shaped receiving region (25) for the valve element, a passage opening (45) connecting an upper and a lower side (49; 51) of the valve element (13), with the result that approximately the same operating pressure can prevail on both sides (49; 51).

7. Adjustable vibration damper according to Claim 6, **characterized in that** the pressure-relief valve (15; 17; 29) has a bridging channel (53) from one of the operating spaces (11) which are filled with damping medium to the rear side (49) of the valve element (13).

8. Adjustable vibration damper according to Claim 3, **characterized in that** the valve element (13) has a receptacle (27) which is in the shape of a blind hole and in which the pressure-relief valve (15; 17; 29) is arranged.

9. Adjustable vibration damper according to Claim 6, **characterized in that** the pressure-relief valve (15; 17; 29) is arranged at an axial spacing from a base (39) of the receptacle (27), and a valve space (41) which is delimited as a result is connected to a space (9) of the vibration damper (1), which space (9) is filled with damping medium.

10. Adjustable vibration damper according to Claim 1, **characterized in that** the valve element (13) is prestressed into an operating position.

11. Adjustable vibration damper according to Claim 10, **characterized in that** at least one prestressing spring (55) is supported on the pressure-relief valve (29; 55).

12. Adjustable vibration damper according to Claim 1, **characterized in that** the valve element (13) is configured as a seat valve.

13. Adjustable vibration damper according to Claim 1, **characterized in that** a passage cross section takes up between 1/100 and 1/1000 of the displacer surface area in the maximum opening passage position.

## Revendications

1. Amortisseur réglable (1), comprenant un cylindre (3) dans lequel un piston (5) effectue un mouvement de commande, au cours duquel un fluide d'amortissement gazeux est comprimé dans une chambre de travail (9; 11), dans lequel la chambre de travail (9; 11) est en communication active avec un corps de soupape (19), qui présente au moins un canal de passage (23; 44) depuis ladite chambre de travail (9; 11) jusqu'à une autre chambre (9; 11) et la résistance à l'écoulement de l'au moins un canal de passage (23; 44) est réglable au moyen d'un actionneur (21), **caractérisé en ce qu'**un élément de soupape (13), qui ferme au moins en partie l'au moins un canal de passage (23; 44), peut être déplacé dans le corps de soupape (19), indépendamment d'un mouvement de déplacement ou d'une différence de pression entre les chambres (9; 11) de l'amortisseur (1), par l'actionneur (21) dans une position de passage libérant le canal de passage (23; 44).

2. Amortisseur réglable selon la revendication 1, **caractérisé en ce qu'**une soupape de limitation de la pression (15; 17) est disposée en parallèle au point de vue fonctionnel avec l'élément de soupape (13) entre les chambres (9; 11) remplies de fluide d'amortissement.

3. Amortisseur réglable selon la revendication 2, **caractérisé en ce que** la soupape de limitation de la pression (15; 17) est disposée à l'intérieur de l'élément de soupape réglable (13).

4. Amortisseur réglable selon la revendication 2, **caractérisé en ce que** la soupape de limitation de la pression (15; 17; 29) est conçue pour les deux sens de passage du corps de soupape (19).

5. Amortisseur réglable selon la revendication 1, **caractérisé en ce que** l'élément de soupape (13) est alimenté des deux côtés avec la pression régnant dans la chambre (11) remplie de fluide d'amortissement.

6. Amortisseur réglable selon la revendication 5, **caractérisé en ce que** le corps de soupape (19) présente une zone de réception (25) en forme de pot pour l'élément de soupape, dans lequel une ouverture de passage (45) relie un côté supérieur et un côté inférieur (49; 51) de l'élément de soupape (13), de telle manière qu'une pression de fonctionnement sensiblement identique puisse être présente sur les deux côtés (49; 51).

7. Amortisseur réglable selon la revendication 6, **caractérisé en ce que** la soupape de limitation de la pression (15; 17; 29) présente un canal de jonction (53) depuis une des chambres (11) remplies de fluide d'amortissement jusqu'au côté arrière (49) de l'élément de soupape (13).

8. Amortisseur réglable selon la revendication 3, **caractérisé en ce que** l'élément de soupape (13) présente un logement en forme de trou borgne (27) dans lequel la soupape de limitation de la pression (15; 17; 29) est disposée.

9. Amortisseur réglable selon la revendication 6, **caractérisé en ce que** la soupape de limitation de la pression (15; 17; 29) est disposée à une distance axiale d'un fond (39) du logement (27) et une chambre de soupape (41) ainsi délimitée est reliée à une chambre (9) de l'amortisseur (1) remplie de fluide d'amortissement.

10. Amortisseur réglable selon la revendication 1, **caractérisé en ce que** l'élément de soupape (13) est précontraint dans une position de fonctionnement.

11. Amortisseur réglable selon la revendication 10, **caractérisé en ce qu'**au moins un ressort de précontrainte (55) prend appui sur la soupape de limitation de la pression (29; 55).

12. Amortisseur réglable selon la revendication 1, **caractérisé en ce que** l'élément de soupape (13) est une soupape à siège.

13. Amortisseur réglable selon la revendication 1, **caractérisé en ce qu'**une section transversale de passage occupe entre 1/100 et 1/1000 de la surface de déplacement lorsque la position de passage est ouverte au maximum.
